# EUROPEAN PATENT APPLICATION

(11) **EP 1 168 676 A1**
(43) Date of publication of application: **02.01.2002**
(21) Application number: 01904497.3
(22) Date of filing: 16.02.2001
(51) Int. Cl.: H04B 7/26, H04Q 7/38

(54) **MOBILE COMMUNICATION SYSTEM AND MOBILE COMMUNICATION METHOD**

(30) Priority: 17.02.2000 JP 2000039545
(71) Applicant: MATSUSHITA ELECTRIC INDUSTRIAL CO., LTD., Kadoma-shi, Osaka 571-8501 (JP)
(72) Inventor: SUZUKI, Hideta, Yokosuka-shi, Kanagawa 238-0021 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: JP0101111
(87) International publication number: WO0161887

(57) **Abstract**

When a mobile station 51 receives both a connection test signal, which is transmitted from a mobile station 50 just before communication is started, and a relay test signal, which is transmitted after a base station 52 receives the connection test signal transmitted from the mobile station 50, the mobile station 51 compares the reception levels of the received connection test signal and relay test signal. When the reception level of the connection test signal is higher than that of the relay test signal, the mobile station 51 starts direct communication with the mobile station 50, and when the reception level of the relay test signal is higher than that of the connection test signal, the mobile station 51 starts communication with the mobile station 50 via the base station 52.

## Description

### Technical Field

The present invention relates to a mobile communication system and a mobile communication method.

### Background Art

In conventional, there is a mobile communication system that is capable of performing direct communication between mobile stations when the mobile stations are adjacent to each other. This type of mobile communication system is disclosed in, for example, Unexamined Japanese Patent Publication HEI 6-90480.

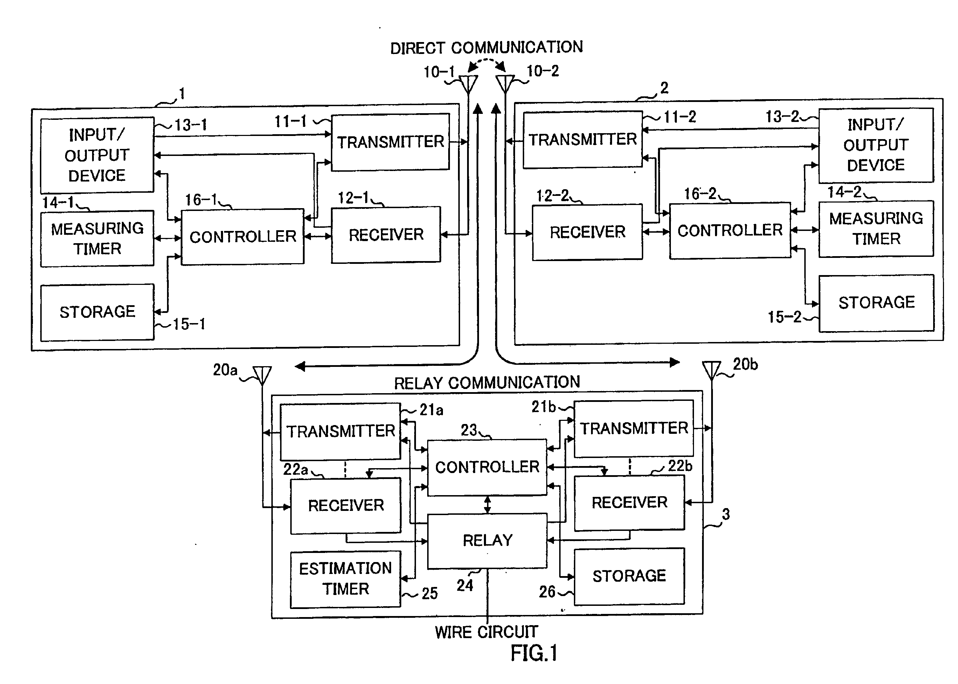

FIG. 1 is a block diagram illustrating the configuration of the mobile communication system disclosed in the above publication. In FIG. 1,a mobile station 1 is composed of an antenna 10-1, a transmitter 11-1, a receiver 12-1, an input/output device 13-1, a measuring timer 14-1, storage 15-1, and a controller 16-1. A mobile station 2 is composed of an antenna 10-1, a transmitter 11-2, a receiver 12-2, an input/output device 13-2, a measuring timer 14-2, storage 15-2, and a controller 16-2.

At the mobile station 1, the transmitter 11-1 transmits signals to a base station and other mobile stations. The number of mobile stations and the number of base stations illustrated in the figure are not limited. Since the number of mobile stations is two or more and the number of base stations is one or more, no reference numeral is added when it is necessary to specify them in the explanation given below.

The receiver 12-1 receives radio signals transmitted from the base station and the other mobile stations. The input/output device 13-1 is composed of an on-hook switch, an off-hook switch, a power switch, a microphone, a speaker, and an amplifier (they are not shown). When an operator turns on the off-hook switch and starts to speak, a speech is picked up by the microphone and the speaking voice is converted to a speech signal and the speech signal is inputted to the transmitter 11-1. On the other hand, the operator's voice of a communication partner received by the receiver 12-1 is amplified up to a given level by the amplifier (not shown) and the amplified voice is outputted from the speaker. The measuring timer 14-1 measures time of direct communication with the other mobile station. The storage 15-1 stores information set by the base station. The controller 16-1 controls the transmitter 11-1, receiver 12-1, input/output device 13-1, measuring timer 14-1, and storage 15-1.

At the mobile station 2, the transmitter 11-2 transmits a signal to a base station and other mobile stations. The receiver 12-2 receives a radio signal transmitted from the base station and the other mobile stations. The input/output device 13-2 is composed of an on-hook switch, an off-hook switch, a power switch, a microphone, a speaker, and an amplifier (they are not shown). When an operator turns on the off-hook switch and starts to speak, a speech is picked up by the microphone and the speaking voice is converted to a speech signal and the speech signal is inputted to the transmitter 11-2. On the other hand, the operator's voice of a communication partner received by the receiver 12-2 is amplified up to a given level by the amplifier (not shown) and the amplified voice is outputted from the speaker. The measuring timer 14-2 measures time of direct communication with the other mobile station. The storage 15-2 stores information set by the base station. The controller 16-2 controls the transmitter 11-2, receiver 12-2, input/output device 13-2, measuring timer 14-2, and storage 15-2.

A base station 3 is composed of antennas 20a, 20b, transmitters 21a, 21b, receivers 22a, 22b, a controller 23, a relay 24, an estimation timer 25, and storage 26. Each of the transmitters 21a and 21b transmits a signal to the mobile station. Each of the receivers 22a and 22b receives the signal from the mobile stations. The relay 24 relays the signal transmitted from the mobile station to the other mobile station or the other base station. The estimation timer 25 estimates the end of direct communication of the mobile station. The storage 26 stores the setting of mobile station unit. The controller 23 controls the transmitters 21a, 21b, the receivers 22a, 22b, the relay 24, the estimation timer 25, and the storage 26.

An explanation will be next given of the operation of the above-configured mobile communication system.

After establishing the channel between the base station 3 and the mobile station 1 where a call state is set, the controller 23 of the base station 3 first transmits a test signal for confirming as to whether direct communication can be performed to the mobile stations 1 and 2 using the transmitters 21a and 21b. When the receivers 12-1, 12-2 receive the test signal, the controllers 16-1 and 16-2 of the mobile stations 1 and 2 control the transmitters 11-1, 11-2 and the receivers 12-1, 12-2 to perform transmission and reception alternately using a designated channel and to test whether direct communication can be performed. After that, the result of test is transmitted to the base station 3 using the transmitters 11-1 and 11-2.

The base station 3 receives the result of test sent from the mobile stations 1 and 2 using the receivers 22a and 22b. Then, when it is determined from the received result of test that direct communication is impossible, the base station 3 relays communication between the mobile station 1 and the mobile station 2.

In connection with the communication carried out by the relay of base station 3, the controller 16-1 of mobile station 1 transmits a signal to be sent to the base station 3 using the transmitter 11-1 . The controller 16-2 of mobile station 2 transmits a signal to be sent to the base station 3 using the transmitter 11-2. The controller 23 of base station 3 delivers the signals received by the receivers 22a and 22b via the relay 24 to the transmitters 21a and 21b to be transmitted to the mobile stations 1 and 2.

While, when it is determined from the received result of test that direct communication is possible, the base station 3 does not relay communication between the mobile station 1 and the mobile station 2.

In the case where the direct communication between the mobile station 1 and the mobile station 2 is possible, the base station 3 transmits a signal for setting a channel for direct communication and communicable time to the mobile stations 1 and 2, and then ends the relay operation. The mobile stations 1 and 2 start the direct communication using the channel designated by the base station 3. At the same time, the mobile stations 1 and 2 set the measuring timers 14-1 and 14-2 in motion to measure direct communication time. When the measured time exceeds communicable time set at the direct communication starting time, the mobile stations 1 and 2 end the direct communication, and try connection to the base station 3 again.

However, according to the conventional mobile communication system, in the case where two mobile stations 1 and 2 are directly communicable with each other, the direct communication is carried out as it is even if communication via the base station 3 can obtain better communication quality. This causes a problem in which two mobile stations cannot perform communication with each other with better quality at all times.

### Disclosure of Invention

An object of the present invention is to provide a mobile communication system and a mobile communication method wherein two mobile stations can perform communication with each other with better quality at all times.

The above object can be attained by performing communication via a base station in the case where such communication via the base station can provide better communication quality even if two mobile stations are directly communicable with each other.

### Brief Description of Drawings

FIG. 1 is a block diagram illustrating the configuration of a conventional mobile communication system; and
FIG. 2 is a block diagram illustrating the configuration of a mobile communication system according to one embodiment of the present invention. Best Mode for Carrying Out the Invention

The following will specifically explain the best mode for carrying out the invention with reference to the drawing accompanying herewith.

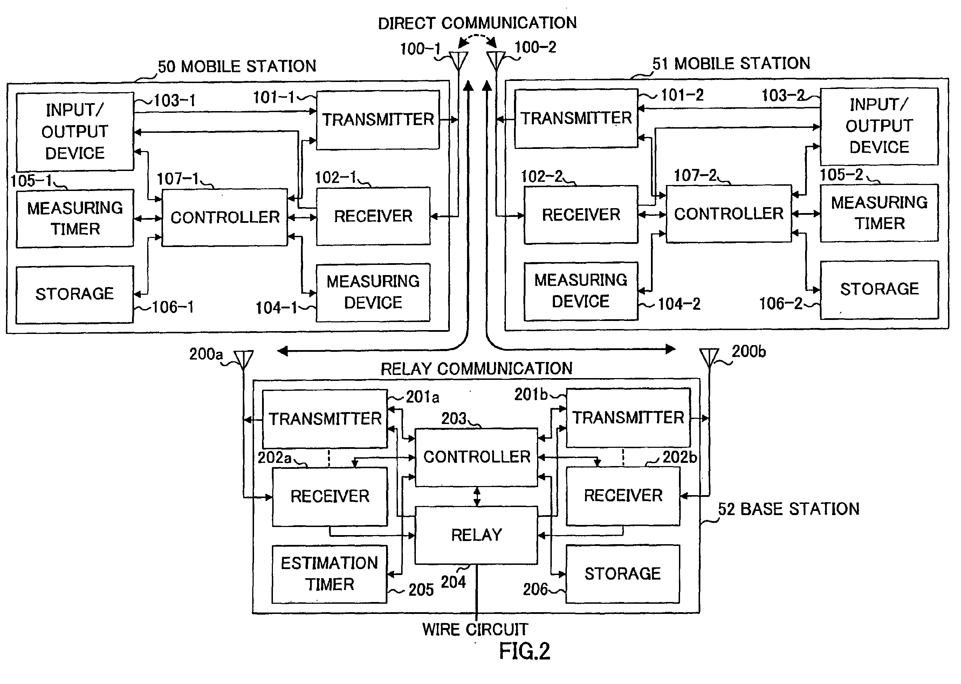

FIG. 2 is a block diagram illustrating the configuration of a mobile communication system according to one embodiment of the present invention. In FIG. 2, a mobile station 50 is composed of an antenna 100-1, a transmitter 101-1, a receiver 102-1, an input/output device 103-1, a measuring device 104-1, a measuring timer 105-1, storage 106-1, and a controller 107-1. A mobile station 51 is composed of an antenna 100-2, a transmitter 101-2, a receiver 102-2, an input/output device 103-2, a measuring device 104-2, ameasuring timer 105-2, storage 106-2, and a controller 107-2.

At the mobile station 50, the transmitter 101-1 transmits a signal to a base station and other mobile stations. The receiver 102-1 receives a radio signal transmitted from the base station and the other mobile stations. The input/output device 103-1 is composed of an on-hook switch, an off-hook switch, a power switch, a microphone, a speaker, and an amplifier (they are not shown). When an operator turns on the off-hook switch and starts to speak, a speech is picked up by the microphone and the speaking voice is converted to a speech signal and the speech signal is inputted to the transmitter 101-1. On the other hand, the operator's voice of a communication partner received by the receiver 102-1 is amplified up to a given level by the amplifier and the amplified voice is outputted from the speaker. The measuring device 104-1 measures a reception level when signal transmission and reception with the other mobile station via the base station is performed and a reception level when signal transmission and reception with the other mobile station is directly performed. The measured result is sent to the controller 107-1. The measuring timer 105-1 measures time of direct communication with the other mobile station. The storage 106-1 stores information set by the base station. The controller 107-1 controls the transmitter 101-1, receiver 102-1, input/output device 103-1, measuring device 104-1, measuring timer 105-1, and storage 106-1.

At the mobile station 51, the transmitter 101-2 transmits a signal to a base station and other mobile stations. The receiver 102-2 receives a radio signal transmitted from the base station and the other mobile stations. The input/output device 103-2 is composed of an on-hook switch, an off-hook switch, a power switch, a microphone, a speaker, and an amplifier (they are not shown). When an operator turns on the off-hook switch and starts to speak, a speech is picked up by the microphone and the speaking voice is converted to a speech signal and the speech signal is inputted to the transmitter 101-2. On the other hand, the operator's voice of a communication partner received by the receiver 102-2 is amplified up to a given level by the amplifier and the amplified voice is outputted from the speaker. The measuring device 104-2 measures a reception level when signal transmission and reception with the other mobile station via the base station is performed and a reception level when signal transmission and reception with the other mobile station is directly performed. The measuring timer 105-2 measures time of direct communication with the other mobile station. The storage 106-2 stores information set by the base station. The controller 107-2 controls the transmitter 101-2, receiver 102-2, input/output device 103-2, measuring device 104-2, measuring timer 105-2, and storage 106-2.

A base station 52 is composed of antennas 200a, 200b, transmitters 201a, 201b, receivers 202a, 202b, a relay 24, an estimation timer 205, storage 206, and a controller 203.

The transmitters 201a and 201b transmit signals to two mobile stations. The receivers 202a and 202b receive signals each being sent from two mobile stations to be communicated with each other. The relay 204 relays communication from one (e.g., mobile station 50) of two mobile stations to be communicated with each other to the other mobile station (e.g., mobile station 51) or the other base station. The estimation timer 205 measures time for which the relay 204 relays communication. The storage 206 stores the relay time measured by the measuring timer 205 and direct communication time between the mobile stations. The controller 203 controls the transmitters 201a, 201b, receivers 202a, 202b, relay 204, estimation timer 205, and storage 206.

An explanation will be next given of the operation of the above-configured mobile communication system.

First, the mobile station 50 transmits a connection test signal to the mobile station 51 and the base station 52 using the transmitter 101-1 at the time of calling the mobile station 51. When the receiver 202a receives the connection test signal, the controller 203 transmits a relay test signal to the mobile station 51 using the transmitter 201b.

When the receiver 102-2 receives only the relay test signal, the controller 107-2 of the mobile station 51 cannot receive the connection test signal from the mobile station 50. Then, the controller 107-2 transmits a relay connectable signal to the base station 52 using the transmitter 101-2 when receiving only the relay test signal from the base station 52. While, when the receiver 202b receives the relay connectable signal, the controller 203 of the base station 52 transmits the relay connectable signal to the mobile station 50 using the transmitter 201a. This starts communication between the mobile station 50 and the mobile station 51 via the base station 52. In other words, the base station 52 relays communication between the mobile station 50 and the mobile station 51.

When the receiver 102-2 can receive both the connection test signal and the relay test signal, the controller 107-2 of the mobile station 51 measures the reception levels of both test signals, and compares the measured reception levels of both test signals using the measuring device 104-2. When the controller 107-2 determines that the reception level of the relay test signal is higher than that of the connection test signal as a result of comparison in the reception level therebetween, the controller 107-2 transmits the relay connectable signal to the base station 52. When the base station 52 receives the relay connectable signal, the base station 52 transmits the signal to the mobile station 50. On the other hand, when the controller 107-2 determines that the reception level of the connection test signal is higher than that of the relay test signal, the controller 107-2 of the mobile station 51 directly transmits a direct connectable signal to the base station 50.

The mobile station 50 receives the relay connectable signal or the direct connectable signal using the receiver 102-1. The following will explain the operation, which is carried out when the mobile station 50 receives the relay connectable signal or the direct connectable signal.

### (Case where the relay connectable signal is received)

When the receiver 102-1 receives the relay connectable signal, the controller 107-1 of the mobile station 50 transmits a signal to be transmitted to the base station 52 using the transmitter 101-1. When the receiver 202a receives the signal transmitted from the base station 50, the controller 203 of the base station 52 sends the signal received via the relay 204 to the transmitter 201b, and transmits it to the mobile station 51.

The controller 107-2 of the mobile station 51 receives the signal, which is relayed at the base station 52 and sent from the mobile station 50, using the receiver 102-2. When there is a signal to be transmitted, the controller 107-2 of the mobile station 51 transmits the signal to the base station 52 using the transmitter 101-2. When the receiver 202b receives the signal transmitted from the mobile station 51, the base station 52 sends the signal to the transmitter 201a via the relay 204 and transmits it to the base station 50.

While, the controller 203 of the base station 52 starts the relay between two mobile stations 50, 51, and the measurement of relay time using the measuring timer 205. After the relay, the controller 203 stores the measured relay time to the storage 206.

### (Case where the direct connectable signal is received)

The controller 107-1 of the mobile station 50 transmits a channel designation signal to the mobile station 51 using the transmitter 101-1 when receiving the direct connectable signal, and adjusts the transmitter 101-1 and the receiver 102-1 to the designated channel. While, the controller 107-2 of the mobile station 51 adjusts the transmitter 101-2 and the receiver 102-2 to the designated channel when receiving the channel designation signal using the receiver 102-2. After the channel adjustment is performed between the mobile stations 50 and 51, communication is started over the channel.

The controller 107-1 of the mobile station 50 starts the direct communication and measures time of the direct communication using the measuring timer 105-1. After the direct communication, the relay, the controller 107-1 stores the measured direct communication time to the storage 106-1. The direct communication time stored in the storage 106-1 is sent to the base station 52 when connection to the base station 52 is performed next time.

As mentioned above, according to the mobile communication system of this embodiment, the mobile station 51 performs communication with the mobile station 50 as a communication partner via the base station 52 in the following cases. Namely, one is that the mobile station 51 cannot receive the connection test signal sent from the mobile station 50 as a communication partner just before the start of communication and the mobile station 51 can receive only the relay test signal sent from the base station 52 that has received the connection test signal. The other is that the mobile station 51 can receive the connection test signal but the reception level of the connection test signal is lower than that of the relay test signal sent from the base station 52. While, there is the case in which the mobile station 51 can receive the connection test signal from the mobile station 50 as a communication partner and the reception level of the connection test signal is higher than that of the relay test signal sent from the base station 52. In this case, the mobile station 51 performs direct communication with the mobile station 50 as a communication partner via no base station 52.

Accordingly, in the case where communication via the base station 52 can obtain better communication quality even if two mobile stations 50 and 51 are in a direct communicable state, communication via the base station 52 is performed to make it possible to carry out communication with better quality at all times.

The above embodiment has explained the case in which the mobile station 50 starts communication with the base station 52 or the mobile station 51. However, it is obvious that the present invention can be similarly applied to the case in which the mobile station 51 starts communication with the base station 52 or the mobile station 50.

As explained above, according to the present invention, even if two mobile stations are in a direct communicable state, communication is performed via the base station without performing direct communication between two mobile stations if the reception level of a connection test signal transmitted from the mobile station as a communication partner is lower than that of a relay connection test signal transmitted from the base station. Accordingly, two mobile stations can perform communication with better quality at all times.

This application is based on the Japanese Patent Application No. 2000-039545, entire content of which is expressly incorporated by reference herein

### Industrial Applicability

The present invention is suitable for use in a mobile communication system such as a cellular phone and the like.

## Claims

1. A mobile station of a mobile communication system comprising:
transmitting means for converting a signal to a radio signal to be transmitted;
receiving means for receiving said radio signal;
signal level measuring means for measuring a signal level; and
controlling means, when both a connection test signal transmitted from a mobile station as a communication partner and a relay test signal transmitted from a base station are received in a standby status, for measuring a signal level of said received connection test signal and a signal level of said relay test signal using said signal level measuring means to compare results, for transmitting a relay connectable signal to said base station when the signal level of said relay test signal is higher than the signal level of said connection test signal, and for transmitting a direct connectable signal to said mobile station as a communication partner when the signal level of said connection test signal is higher than the signal level of said relay test signal.

2. The mobile station of a mobile communication system according to claim 1, further comprising:
communication time measuring means for measuring time for which direct communication with said mobile station as a communication partner is performed; and
storing means for storing communication time measured by said communication time measuring means at the time when said direct communication with said mobile station as a communication is ended, wherein when said controlling means transmits the connection test signal to said mobile station as a communication partner and said base station at the time of calling said mobile station as a communication partner and can receive only the relay connectable signal transmitted from said base station by the transmission of the connection test signal, said controlling means starts communication with said mobile station as a communication partner via said base station, and when said controlling means can receive only the direct connectable signal transmitted from said mobile station as a communication partner, said controlling means starts direct communication with said mobile station as a communication partner, and when said direct communication with said mobile station as a communication partner is performed, said controlling means transmits said communication time stored in said storing means to said base station at next communication time with said base station.

3. The mobile station of a mobile communication system according to claim 2, wherein when said controlling means receives said direct connectable signal transmitted from said mobile station as a communication partner, said controlling means transmits a channel designation signal for designating a channel to said mobile station as a communication partner and adjusts the channel of its mobile station to said designated channel, and when said controlling means receives a channel designation signal transmitted from said mobile station as a communication partner, said controlling means adjusts the channel of its mobile station to the channel designated by said received channel designation signal.

4. A base station of a mobile communication system comprising:
transmitting means for converting a signal to a radio signal to be transmitted;
receiving means for receiving said radio signal; and
controlling means for transmitting a relay test signal to a mobile station as a communication partner for a mobile station that transmits a connection test signal when receiving said connection test signal, and for relaying commutation between said two mobile stations when receiving a relay connectable signal transmitted from said mobile station as a communication partner for said mobile station.

5. A mobile communication system comprising the mobile station of the mobile communication system described in claim 1 and the base station of the mobile communication system described in claim 4.

6. A mobile communication method comprising the steps of:
transmitting a connection test signal to a base station and a second mobile station from a first mobile station;
transmitting a relay test signal to said second mobile station when said base station receives said connection test signal;
comparing a reception level of said connection test signal with a reception level of said relay test signal when said second mobile station receives said connection test signal and said relay test signal; and
transmitting a relay connectable signal to said base station when the reception level of said relay test signal is higher than that of said connection test signal, and transmitting a direct connectable signal to said first mobile station via no said base station when the reception level of said connection test signal is higher than that of said relay test signal.

7. A mobile communication method comprising the steps of:
transmitting a channel designation signal to a second mobile station to adjust its channel to said designation channel when a first mobile station receives a direct connectable signal; and
starting transmission and reception on said designation channel in accordance with said designation channel when said second mobile station receives said channel designation channel.
